# EUROPÄISCHE PATENTSCHRIFT

(11) **EP 3 204 205 B1**
(45) Veröffentlichungstag und Bekanntmachung des Hinweises auf die Patenterteilung: **30.06.2021**
(21) Anmeldenummer: 15797586.3
(22) Anmeldetag: 07.10.2015
(51) Int. Cl.: B29B 7/74, B29B 7/60, B29B 7/42, B29C 48/25, B29C 48/285, B65G 53/00, B29B 7/48, B29C 48/03, B29C 48/92

(54) **VERFAHREN ZUR HERSTELLUNG VON KUNSTSTOFFERZEUGNISSEN MITTELS EINES EXTRUDERS, SOWIE DARAUF BEZOGENE FORMGEBENDE ANLAGE**
METHOD FOR PRODUCING PLASTIC PRODUCTS USING AN EXTRUDER, AND RELATED SHAPING SYSTEM
PROCÉDÉ POUR LA PRODUCTION DE PRODUITS EN MATIÈRE PLASTIQUE AU MOYEN D'UNE EXTRUDEUSE, ET INSTALLATION DE FORMAGE ASSOCIÉE

(30) Priorität: 07.10.2014 DE 102014014583
(43) Veröffentlichungstag der Anmeldung: 16.08.2017
(73) Patentinhaber: x-per Extruder Performance GmbH, 50181 Bedburg (DE)
(72) Erfinder: SCHRAMM, Jens, 19057 Schwerin (DE)
(74) Vertreter: Grosse, Felix Christopher
(86) Internationale Anmeldenummer: PCT/DE2015/000489
(87) Internationale Veröffentlichungsnummer: WO 2016/055043

(56) Entgegenhaltungen:
- DE-A1- 1 604 354
- DE-A1- 1 604 389
- DE-A1- 10 018 321
- DE-A1-102013 100 812
- JP-A- H0 724 899
- JP-A- S57 178 734
- JP-A- S62 212 121
- JP-A- 2000 167 840
- US-A1- 2008 290 537
- US-A1- 2014 023 743

## Beschreibung

Die Erfindung betrifft ein Verfahren zur Herstellung von Erzeugnissen, insbesondere Kunststofferzeugnissen, sowie eine darauf bezogene formgebende Anlage Insbesondere betrifft die Erfindung ein Verfahren zur Herstellung von Kunststofferzeugnissen mittels eines Extruders, dem aus einer ersten Gruppe von Dosierstationen eine erste Kunststoffmischung aus einer ersten Hauptkomponente und mindestens einer dazugehörigen Nebenkomponente zugeführt wird.

In der Kunststoffindustrie befindet sich heutzutage auf jedem Extruder eine Dosierstation mit Saugförderung. Dies gilt sowohl für Monoanlagen als auch Mehrschichtanlagen, sowohl für Blasfolienanlagen als auch andere kunststoffformgebende Anlagen, und sowohl für eine Mischkomponente als auch mehrere Komponenten als Zuschlagstoffe zur Dosierung. Über geeignete Sensoren an den Dosier- und Wiegestationen werden die Extruderantriebe und Anlagenregelungen mit Informationen versorgt, um die Extruderdrehzahl zu regeln und den Ausstoß auf dem gewünschten Durchsatz zu halten.

Bei kontinuierlich arbeitenden Anlagen müssen bei jeder Anlagenumstellung zwischen Beendigung eines Produktionsauftrags und Beginn eines neuen Produktionsauftrags die Rohstoffe ganz oder teilweise aus den Saugfördergeräten und Dosierbehältern abgelassen und die neuen Rohstoffe geladen werden. Dies dauert bei einer Dreischichtanlage bis zu einer Stunde. Der Bediener hat keine Möglichkeit, die Rohstoffe vorher zu laden und der Maschine zuzuführen. Während der Umstellung fällt je nach Anlagenkonfiguration bis zu 750 kg Abfall an, und man verliert effektive Produktionszeit.

Bei diskontinuierlich arbeitenden Anlagen fällt kein oder wenig Abfall an, doch verliert man ebenfalls Produktionszeit. Die DE 35 06 635 C2 offenbart ein Verfahren zur Herstellung von Erzeugnissen mittels eines Extruders, dem aus einer Gruppe von Dosierstationen eine aus mehreren Komponenten bestehende Kunststoffmischung zugeführt wird. In einem Zulauftrichter, dem alle Komponenten zugeführt werden, befindet sich ein Füllstandsmelder, der wahlweise die Zufuhr der Komponenten durch Steuern der Drehzahlen von Rotations-Auftragseinrichtungen sperrt oder freigibt. Dies ermöglicht ein Umschalten von einer Nebenkomponente auf eine andere Nebenkomponente und somit eine Änderung der Zusammensetzung des den Extruder verlassenden Materials ohne Betriebsunterbrechung, z. B. für einen Farbwechsel.

Die WO 2007/101359 A2 offenbart ein Verfahren zum Herstellen von Artikel aus einer pastösen Masse aus einer Hauptkomponente und variabel darin eindosierbaren Nebenkomponenten. Die WO 2013/026506 A1 und die WO 2014/127918 A1 offenbaren jeweils eine Schmelzeverarbeitungsanlage mit einem Schmelzebeschicker zum Beschicken eines Verarbeitungskopfs mit Schmelze, wobei zwischen dem Schmelzebeschicker und dem Verarbeitungskopf ein Anfahrventil zum Ableiten der Schmelze während einer Anfahr oder Umrüstphase wie z. B. von farbiger auf nicht farbige Schmelze zugeordnet ist. Die DE 28 47 431 A offenbart eine Vorrichtung zum dosierten Beigeben flüssiger Zugabemittel wie z. B. Vernetzungsmittel zum Grundmaterial für kunststoffisolierte Kabel, die in einem Extruder kontinuierlich hergestellt werden. Damit der Extruder auch dann kontinuierlich mit Vernetzungsmittel beschickt werden kann, wenn ein eine Dosiervorrichtung bildendes Aggregat durch Störung oder dgl. ausgefallen ist, sind zwei parallele Speicherbehälter für ein und dasselbe Vernetzungsmittel vorgesehen, die jeweils über parallele Absperrhähne und Absperrmagnetventile angeschlossen sind. So kann unter Umgehung des fehlerhaften Aggregats ein kontinuierlicher Fluss des Vernetzungsmittels zum Extruder hin sichergestellt werden.

Die US 2014/0023743 A1 zeigt eine Anlage mit mehreren modulartig austauschbaren Komponenten, insbesondere mehreren Waggons, die unterschiedliche Kunststoffmischungen beinhalten und mehrere austauschbare gravimetrische Beschicker zum Beschicken des Extruders. Um die Stillstandzeit der Anlage nicht vom Reinigen der Beschicker abhängig zu machen, können die Beschicker zwischen jedem Chargenwechsel ausgetauscht werden.

In der DE 1 604 354 wird eine Vorrichtung zur Aufbereitung von Thermoplasten offenbart. Hierzu wird eine Dosierstation vorgesehen, wobei ein Rüssel zwischen drei verschiedenen Aufbereitungsmischern verschwenkt werden kann, sodass die Aufbereitungsmischer sukzessive beschickt werden.

In der DE 1 604 389 ist eine Vorrichtung zur kontinuierlichen Beschickung eines Mischaggregates mit Gießharz und Härter offenbart. Hierzu werden Dosiersysteme mit der jeweils gleichen Mischung beaufschlagt. Über Dosierschieber wird das Verhältnis von Härter und Harz aus verschiedenen Behältern in gemeinsame Auslauföffnungen eingestellt.

Die US 2008/0290537 A1 offenbart eine Vorrichtung und zugehöriges Verfahren zum Verarbeiten von recyclebarem thermoplastischen Kunststoffmaterial. Hier wird die zu verarbeitende Kunststoffmischung über zwei Stufen dem Extruder zugeführt. In der ersten Stufe sind zwei Aufnahmebehälter parallel angeordnet, über welche die Kunststoffmischung jeweils mittels einer Schnecke und eines Absperrschiebers in einen darunter liegenden Sammelbehälter der zweiten Stufe abgelassen werden kann. Der Sammelbehälter der zweiten Stufe wird abwechselnd mit der Kunststoffmischung aus den beiden Aufnahmebehältern der ersten Stufe befüllt.

Der Erfindung liegt die Aufgabe zu Grunde, ein Verfahren und zugehörige Anlage zur Herstellung von Kunststofferzeugnissen anzugeben, bei dem ohne signifikanten Produktionszeitverlust von einem Produktionsauftrag für ein Kunststofferzeugnis zu einem anderen Produktionsauftrag für ein anderes Kunststofferzeugnis gewechselt werden kann.

Diese Aufgabe wird durch ein Verfahren mit den Merkmalen des Patentanspruchs 1 und durch eine Vorrichtung mit den Merkmalen des Patentanspruchs 10 gelöst. Vorteilhafte Weiterbildungen der Erfindung sind in den abhängigen Patentansprüchen angegeben.

Das Umstellen wird demnach durchgeführt, indem die Zufuhr der ersten Kunststoffmischung durch Schließen eines ersten Absperrorgans beendet wird und die Zufuhr der zweiten Kunststoffmischung durch Öffnen eines zweiten Absperrorgans begonnen wird. Dabei wird das Schließen des ersten Absperrorgans und das Öffnen des zweiten Absperrorgans zeitgleich oder in kurzem zeitlichem Abstand durchgeführt, sodass bei der Umstellung von dem ersten Produktionsauftrag auf den zweiten Produktionsauftrag die Beschickung des Extruders kontinuierlich erfolgt. Ferner ist mindestens eine Komponente der ersten Kunststoffmischung von allen Komponenten der zweiten Kunststoffmischung verschieden oder mindestens eine Komponente der zweiten Kunststoffmischung von allen Komponenten der ersten Kunststoffmischung verschieden.

Je nach Anordnung der Schieber kann es vorteilhaft sein, zunächst die Höhe leerlaufen zu lassen.

Die Erfindung ermöglicht es, die Umstellzeit von einem Produktionsauftrag zu einem anderen erheblich zu verkürzen, indem die zweite, während des ersten Produktionsauftrags inaktive Dosierung während der laufenden Produktion mit den Rohstoffen für den Folgeauftrag befüllt wird. Dies bei jeder Art von Verarbeitungsmitteln möglich, vor allem ist es bei einem Extruder möglich.

Alle Mengenangaben und Dichten der Rohstoffe können schon eingestellt werden, während der erste Produktionsauftrag läuft. Ist dieser Auftrag beendet, stoppt man die Zufuhr des Rohstoffes auf der aktiven Dosierung, d. h. der ersten Gruppe von Dosierstationen, und öffnet - ggf. nach Leerlaufen der ersten Produktionsmischung - die Zuführung der bis dahin inaktiven Dosierung, d. h. der zweiten Gruppe von Dosierstationen. Die letztere wird dann sofort in den aktiven Modus geschaltet und regelt von nun an den Extruder.

Eine Dosierung ist in ihrem "inaktiven" Zustand bevorzugt von der Steuerung der aktiven Dosierung vollkommen entkoppelt.

Dies kann beispielsweise dadurch umgesetzt werden, dass die inaktive Dosierung von einer elektrischen Ansteuerung getrennt wird. Dadurch kann die inaktive Dosierung gefahrlos manuell vorbereitet werden.

Eine Alternative besteht in der Möglichkeit, eine redundante Steuerung vorzusehen, welche mit der zweiten, inaktiven Steuerung wirkverbunden ist. In diesem Fall ist bevorzugt ein zweiter Bildschirm zum Ansteuern der inaktiven Dosierung vorgesehen.

Es sei ausdrücklich darauf hingewiesen, dass im Rahmen der hier vorliegenden Patentanmeldung unbestimmte Artikel und Zahlenangaben wie "ein", "zwei" usw. im Regelfall als mindestens-Angaben zu verstehen sein sollen, also als "mindestens ein...", "mindestens zwei..." usw., sofern sich nicht im Einzelfall aus dem Kontext ausdrücklich oder implizit ergibt, dass etwa dort nur "genau ein...", "genau zwei..." usw. gemeint sein kann oder soll. Die Absperrorgane sind vorzugsweise Absperrschieber, die jeweils in einer gemeinsamen Zufuhrleitung von der ersten bzw. zweiten Gruppe von Dosierstationen zu dem Extruder angeordnet sind.

Die Absperrschieber können zur besseren und sicheren Identifizierung der aktiven und inaktiven Dosierung abgesichert werden, vorzugsweise durch Erkennung bzw. Steuerung der aktuellen Schieberpositionen unter Verwendung von Endschaltern oder RFID- Chips, die mit der Maschinensteuerung verbunden sind.

Die Erfindung ist auch bei Anlagen mit mehreren Extrudern anwendbar, wobei zwei Dosierungen oder Gruppen von Dosierstationen pro Extruder aufzustellen sind. Bei sehr kurzen Auftragslängen können auch mehr als zwei mehr Dosierungen pro Extruder aufgestellt werden.

Die Erfindung eignet sich besonders für die Herstellung von Kunststofferzeugnissen aus rieselfähigen Gütern wie z. B. Granulaten und insbesondere für die Herstellung von ein- oder mehrschichtigen Blasfolien. An einem Bedienungsbildschirm einer Anlage zur Herstellung von Kunststofferzeugnissen wie z. B. Blasfolien wird zunächst eine der beiden Dosierungen für die Extruderregelung aktiv geschaltet, und die andere wird passiv geschaltet. So kann der Bediener während der Produktion eines Erzeugnisses auf der passiven Dosierung alle Rohstoffe vorbereiten. Im Startzeitpunkt der neuen Produktion wird über die Absperrschieber die Rohstoffzufuhr der aktiven Dosierung unterbrochen und wird jene der bislang passiven Dosierung geöffnet. Zeitgleich wird die bislang aktive zur jetzt passiven Dosierung für die Anlagen und Extruderregelung.

Sobald das neue Produkt auf der Anlage läuft, kann der Bediener die nicht mehr benötigten Rohstoffe aus der momentan passiven Dosierung ablassen und sortenrein wieder dem Bestand zuführen. Danach kann man die Rohstoffe für den darauffolgenden Auftrag laden. Hierbei kann es sich auch um ein Reinigungsmaterial handeln.

Dadurch werden die Abfallquoten ganz erheblich gesenkt. Nach dem Umschalten der Dosierung gelangen die Rohstoffe für den neuen Auftrag innerhalb von zwei Minuten in den Extruder, und man muss nur warten, bis das Erscheinungsbild des Erzeugnisses eine Produktion zulässt. Solche Umstellungen dauerten bislang oft bis zu 60 Minuten, bevor man zum nächsten Produkt übergehen konnte. Das erfindungsgemäße Verfahren erzeugt wesentlich weniger Abfall und liefert deutlich mehr Maschinenauslastung im Sinne von effektiver Produktionszeit. Die Dosierungen bzw. Gruppe von Dosierstationen können direkt auf dem Extruder, aber auch in Etagen weiter oben aufgestellt werden. Die Schaltung passiv/aktiv kann sowohl manuell als auch per Endschalter oder per RFID Chip gehandhabt werden. Dabei kann der Extruder eine oder mehrere Öffnungen für die Granulatzufuhr aufweisen.

Die zwei oder mehr Hauptkomponenten können gleich oder verschieden sein, und es können eine oder mehrere der dazugehörigen Nebenkomponenten gleich oder verschieden sein. Außerdem kann die erste Gruppe von Dosierstationen eine andere Zahl von Dosierstationen für Nebenkomponenten aufweisen als die zweite Gruppe von Dosierstationen. Bevorzugt ist eine automatische Erkennung des Durchflusses der Dosierungen vorgesehen. Zum Beispiel kann mittels Durchflusswächtern ermittelt werden, welche Dosierung aktiv ist und welche nicht, oder auch, welche Dosierung gerade Material verbraucht und welche nicht.

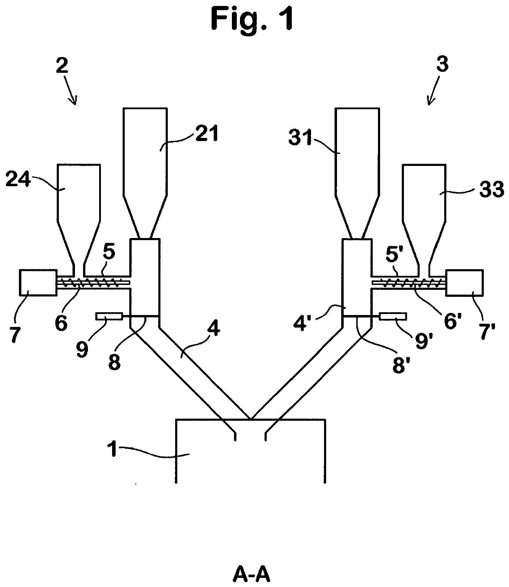

Es folgt eine Beschreibung von Ausführungsbeispielen anhand der Zeichnungen, wobei
- Fig. 1: eine schematische Seitenansicht einer Blasformanlage und

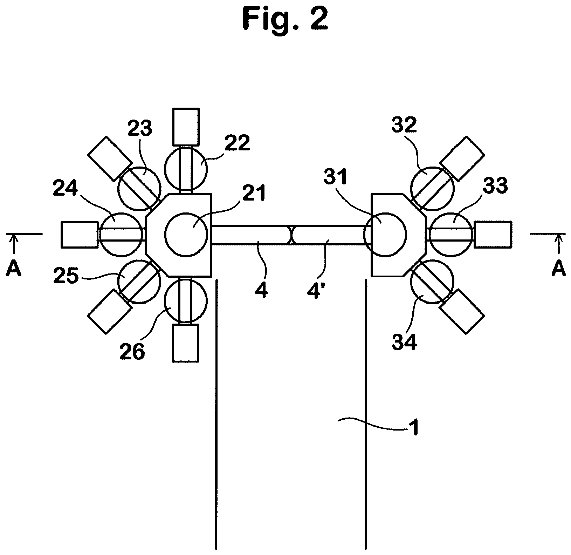

- Fig. 2: eine schematische Draufsicht auf die Blasformanlage von Fig. 1 zeigt.

Die in den Figuren gezeigte Blasformanlage enthält einen Extruder 1, der von zwei Dosierungen 2 und 3 wahlweise mit einer von zwei unterschiedlichen Kunststoffgranulatmischungen versorgt werden kann.

Die erste Dosierung 2 umfasst eine Gruppe von sechs Dosierstationen, zu denen eine Dosierstation 21 für eine Hauptkomponente einer ersten Kunststoffgranulatmischung gehört, die oberhalb des Extruders 1 angeordnet und durch ein Fallrohr 4 damit verbunden ist.

Seitlich in das Fallrohr 4 münden horizontale Verbindungsrohre 5, in denen Förderschnecken 6 angeordnet sind, welche durch Antriebe 7 angetrieben bis zu fünf Nebenkomponenten der ersten Kunststoffgranulatmischung aus fünf Dosierstationen 22, 23, 24, 25 und 26 für die Nebenkomponenten in das Fallrohr 4 fördern. Die Dosierstationen 22, 23, 24, 25 und 26 für die Nebenkomponenten sind in einem Halbkreis um die Dosierstation 21 für die Hauptkomponente herum angeordnet.

Die zweite Dosierung 3 umfasst eine Gruppe von vier Dosierstationen, zu denen eine Dosierstation 31 für eine Hauptkomponente einer zweiten Kunststoffgranulatmischung gehört, die oberhalb des Extruders 1 angeordnet und durch ein Fallrohr 4' damit verbunden ist.

Seitlich in das Fallrohr 4' münden horizontale Verbindungsrohre 5', in denen Förderschnecken 6' angeordnet sind, welche durch Antriebe 7' angetrieben bis zu drei Nebenkomponenten der zweiten Kunststoffgranulatmischung aus drei Dosierstationen 32, 33 und 34 für die Nebenkomponenten in das Fallrohr 4' fördern. Die Dosierstationen 32, 33 und 34 für die Nebenkomponenten sind in einem den Dosierstationen 22, 23, 24, 25 und 26 der ersten Dosierung 2 entgegengesetzten Halbkreis um die Dosierstation 31 für die Hauptkomponente der zweiten Dosierung 3 herum angeordnet.

Unterhalb der Vereinigungsstellen der jeweiligen Haupt- und Nebenkomponenten befindet sich in den Fallrohren 4 und 4' jeweils ein schematisch eingezeichneter Absperr- Schieber 8, 8', der durch einen jeweiligen Antrieb 9, 9' geöffnet und geschlossen werden kann. Die Positionen der Absperrschieber 8, 8' können mittels Endschaltern oder RFID- Chips kontrolliert werden, die mit einer Maschinensteuerung verbunden sind. Die Absperrschieber 8, 8' können programmgesteuert oder durch manuelle Eingabe an der Maschinensteuerung geöffnet und geschlossen werden. Angenommen, es läuft gerade ein erster Produktionsauftrag, in dem der Extruder 1 die erste Kunststoffgranulatmischung aus der ersten Dosierung 2 empfängt, wobei der Absperrschieber 8 geöffnet ist und der Absperrschieber 8' geschlossen ist.

Während der Produktionszeit des ersten Produktionsauftrags können die Dosierstationen 31, 32, 33 und 34 der zweiten Dosierung 3 für einen zweiten Produktionsauftrag vorbereitet werden, der gleich nach Beendigung des ersten Produktionsauftrags starten kann. Dazu wird der Absperrschieber 8 geschlossen und wird der Absperrschiebers 8' geöffnet, so dass der Extruder 1 nun die zweite Kunststoffgranulatmischung aus der zweiten Dosierung 3 empfängt.

### BEZUGSZEICHEN

- 1: Extruder
- 2: erste Dosierung
- 3: zweite Dosierung
- 4, 4': Fallrohr
- 5, 5': Verbindungsrohr
- 6, 6': Förderschnecke
- 7, 7: Förderschneckenantrieb
- 8, 8': Absperrschieber
- 9, 9': Absperrschieberantrieb
- 21, 31: Dosierstation für Hauptkomponente
- 22, 32: Dosierstation für Nebenkomponente
- 23, 33: Dosierstation für Nebenkomponente
- 24, 34: Dosierstation für Nebenkomponente
- 25: Dosierstation für Nebenkomponente
- 26: Dosierstation für Nebenkomponente

## Patentansprüche

1. Verfahren zur Herstellung von Kunststofferzeugnissen in einer kontinuierlich arbeitenden Anlage mittels eines Extruders (1), wobei die Anlage zwei Gruppen von Dosierstationen für den Extruder (1) und eine Steuerung für die Gruppen von Dosierstationen aufweist, wobei dem Extruder (1) aus einer ersten Gruppe von Dosierstationen (21, 22, 23, 24, 25, 26) eine erste Kunststoffmischung, aus einer ersten Hauptkomponente, und mindestens einer zugehörigen Nebenkomponente, zugeführt wird,
wobei während der Produktionszeit eines ersten Produktionsauftrags eine zweite Gruppe von Dosierstationen (31, 32, 33, 34) an dem Extruder (1) für einen zweiten Produktionsauftrag vorbereitet wird, für den dem Extruder (1) eine zweite, von der ersten Kunststoffmischung verschiedene Kunststoffmischung aus einer zweiten Hauptkomponente, und mindestens einer dazugehörigen Nebenkomponente, zuzuführen ist, und dass nach Beendigung des ersten Produktionsauftrags auf den zweiten Produktionsauftrag umgestellt wird, indem die Zufuhr der ersten Kunststoffmischung beendet und die Zufuhr der zweiten Kunststoffmischung begonnen wird,
**dadurch gekennzeichnet, dass**
die Zufuhr der ersten Kunststoffmischung durch Schließen eines ersten Absperrorgans (8) beendet wird und die Zufuhr der zweiten Kunststoffmischung durch Öffnen eines zweiten Absperrorgans (8') begonnen wird, wobei das Schließen des ersten Absperrorgans (8) und das Öffnen des zweiten Absperrorgans (8') zeitgleich oder in kurzem zeitlichen Abstand durchgeführt werden, sodass bei der Umstellung von dem ersten Produktionsauftrag auf den zweiten Produktionsauftrag die Beschickung des Extruders (1) kontinuierlich erfolgt, wobei mindestens eine Komponente der ersten Kunststoffmischung von allen Komponenten der zweiten Kunststoffmischung verschieden ist oder mindestens eine Komponente der zweiten Kunststoffmischung von allen Komponenten der ersten Kunststoffmischung verschieden ist.

2. Verfahren nach Anspruch 1, **dadurch gekennzeichnet, dass** während der Produktionszeit des ersten Produktionsauftrags die zweite Gruppe von Dosierstationen (31, 32, 33, 34) inaktiv geschaltet wird, sodass die Dosierstationen (31, 32, 33, 34) der zweiten Gruppe manuell und/oder mittels einer zweiten Steuerung vorbereitet werden können.

3. Verfahren nach einem der vorstehenden Ansprüche, **dadurch gekennzeichnet, dass** das Umschalten durch manuelles Umlegen eines Teils der Dosierstationengruppen erfolgt.

4. Verfahren nach einem der vorstehenden Ansprüche, **dadurch gekennzeichnet, dass** jedes Absperrorgan (8, 8') ein Absperrschieber in einer gemeinsamen Zufuhrleitung (4, 4') von der ersten (21, 22, 23, 24, 25, 26) bzw. zweiten (31, 32, 33, 34) Gruppe von Dosierstationen zu dem Extruder ist.

5. Verfahren nach einem der vorhergehenden Ansprüche, **dadurch gekennzeichnet, dass** die Schließ- bzw. Öffnungspositionen der Absperrschieber (8, 8') mittels Endschaltern oder RFID-Chips erkannt und einer Maschinensteuerung übermittelt werden.

6. Verfahren nach einem der vorhergehenden Ansprüche, **dadurch gekennzeichnet, dass** das Verfahren mittels mehrerer Extruder (1) durchgeführt wird, zu denen jeweils eine erste und eine zweite Gruppe von Dosierstationen gehören.

7. Verfahren nach einem der vorhergehenden Ansprüche, **dadurch gekennzeichnet, dass** zu dem oder jedem Extruder (1), mehr als zwei Gruppen von Dosierstationen gehören, aus denen ihm nacheinander unterschiedliche Kunststoffmischungen zugeführt werden.

8. Verfahren nach einem der vorhergehenden Ansprüche, **dadurch gekennzeichnet, dass** zumindest die beiden Hauptkomponenten und/oder mindestens eine oder alle Nebenkomponenten rieselfähig sind.

9. Verfahren nach einem der vorhergehenden Ansprüche, **dadurch gekennzeichnet, dass** die Kunststofferzeugnisse Blasfolien, Gießfolien, Vliese oder Spritzgussteile sind.

10. Kunststoffformgebende, gemäß dem Verfahren nach einem der vorhergehenden Ansprüche kontinuierlich arbeitende Anlage zur Herstellung von Kunststofferzeugnissen, mit mindestens einem Extruder (1), wobei die Anlage zwei Gruppen von Dosierstationen für den Extruder (1) und eine Steuerung für die Gruppen von Dosierstationen aufweist, **dadurch gekennzeichnet, dass** die Anlage ein erstes Absperrorgan (8), und ein zweites Absperrorgan (8') aufweist, wobei das erste Absperrorgan (8) und das zweite Absperrorgan (8') dazu eingerichtet sind, die Zufuhr der ersten Kunststoffmischung durch Schließen des ersten Absperrorgans (8) zu beenden und die Zufuhr der zweiten Kunststoffmischung durch Öffnen des zweiten Absperrorgans (8') zu beginnen, wobei das Schließen des ersten Absperrorgans (8) und das Öffnen des zweiten Absperrorgans (8') zeitgleich oder in kurzem zeitlichen Abstand durchführbar sind, sodass bei der Umstellung von dem ersten Produktionsauftrag auf den zweiten Produktionsauftrag der Extruder (1) kontinuierlich beschickbar ist.

11. Anlage nach Anspruch 10, **dadurch gekennzeichnet, dass** ein gravimetrisches Schneckendosiersystem vorgesehen ist, welches dazu eingerichtet ist, die Hauptkomponente mittels einer Dosierschnecke zu dosieren und die Nebenkomponente zuzuführen.

12. Anlage nach Anspruch 10, **dadurch gekennzeichnet, dass** ein Batchdosiersystem vorgesehen ist.

13. Anlage nach Anspruch 10, **dadurch gekennzeichnet, dass** ein Rüttlerdosiersystem vorgesehen ist.

14. Anlage nach einem der vorhergehenden Ansprüche 10 bis 13, **dadurch gekennzeichnet, dass** die kunststoffformgebende Anlage eine Blasfolienanlage, Gießfolienanlage, Spinnvliesanlage, Blasformanlage oder Spritzgussanlage ist.

## Claims

1. Method for producing plastic products by means of an extruder (1) using a continuously working plant, the plant having two groups of dosing stations for the extruder (1) and a control for the groups of dosing stations, wherein the extruder (1) is supplied from a first group of dosing stations (21, 22, 23, 24, 25, 26) with a first plastic composition of a first main component and at least one associated minor component,
wherein during the production time of a first production order a second group of dosing stations (31, 32, 33, 34) at the extruder (1) is prepared for a second production order for which a second plastic composition that is different from the first plastic composition and includes a second main component and at least one associated minor component has to be supplied to the extruder (1), and that after completion of the first production order it is switched to the second production order by terminating the supply of the first plastic composition and starting the supply of the second plastic composition,
**characterized in that**
the supply of the first plastic composition is terminated by closing a first shut-off device (8) and the supply of the second plastic composition is started by opening a second shut-off device (8'), wherein closing the first shut-off device (8) and opening the second shut-off device (8') are performed at the same time or in a short interval such that during the changeover from the first production order to the second production order the supply of the extruder (1) goes on continuously, wherein at least one component of the first plastic composition is different from every component of the second plastic composition or at least one component of the second plastic composition is different from every component of the first plastic composition.

2. Method according to claim 1, **characterized in that** during the production time of the first production order the second group of dosing stations (31, 32, 33, 34) is switched inactive, so that the dosing stations (31, 32, 33, 34) of the second group can be prepared manually and/or by means of a second control.

3. Method according to any of the preceding claims, **characterized in that** the switching is done by manually switching a part of the groups of dosing stations.

4. Method according to any of the preceding claims, **characterized in that** each shut-off device (8, 8') is a shut-off gate in a common supply line (4, 4') from the first (21, 22, 23, 24, 25, 26) or second (31, 32, 33, 34) group of dosing stations to the extruder.

5. Method according to any of the preceding claims, **characterized in that** the closing or opening positions of the shut-off gates (8, 8') are detected by means of limit switches or RFID chips and are transferred by means of a machine control.

6. Method according to any of the preceding claims, **characterized in that** the method is carried out by means of several extruders (1) to each of which a first and a second group of dosing stations belong.

7. Method according to any of the preceding claims, **characterized in that** the one or all extruder(s) (1) have more than two groups of dosing stations from which subsequently different plastic compositions are supplied.

8. Method according to any of the preceding claims, **characterized in that** at least the two main components and/or at least one or all of the minor components are free-flowing.

9. Method according to any of the preceding claims, **characterized in that** the plastic products are blown films, cast films, non-wovens, or injection-molded parts.

10. Continuously working plastic shaping plant for producing plastic products according to the method of any of the preceding claims, having at least one extruder (1), wherein the plant has two groups of dosing stations for the extruder (1) and a control for the groups of dosing stations, **characterized in that** the plant comprises a first shut-off device (8) and a second shut-off device (8'), wherein the first shut-off device (8) and the second shut-off device (8') are configured to terminate the supply of the first plastic composition by closing the first shut-off device (8) and to start the supply of the second plastic composition by opening the second shut-off device (8'), wherein closing the first shut-off device (8) and opening the second shut-off device (8') can be performed at the same time or in a short interval such that during the changeover from the first production order to the second production order the extruder (1) can be supplied continuously.

11. Plant according to claim 10, **characterized in that** a gravimetric screw dosing system is provided that is configured to dose the main component by means of a dosing screw and to supply the minor component.

12. Plant according to claim 10, **characterized in that** a batch dosing system is provided.

13. Plant according to claim 10, **characterized in that** a vibrator dosing system is provided.

14. Plant according to any of the preceding claims 1 to 13, **characterized in that** the plastic shaping plant is a blown film plant, cast film plant, spunbonded fabric plant, blow molding plant, or injection-molding plant.

## Revendications

1. Procédé pour la production de produits en matière plastique dans une installation à opération continue moyennant une extrudeuse (1), ladite installation comprenant deux groupes de stations de dosage pour l'extrudeuse (1) et un organe de commande pour lesdits groupes de stations de dosage, ladite extrudeuse étant alimentée par un premier groupe de stations de dosage (21, 22, 23, 24, 25, 26) en un premier mélange de matières plastiques composé d'un premier composant principal et d'au moins un composant mineur associé,
pendant la période de production d'une première tâche de production, un deuxième groupe de stations de dosage (31, 32, 33, 34) sur ladite extrudeuse (1) étant préparé pour une deuxième tâche de production pour laquelle ladite extrudeuse étant alimentée en un deuxième mélange de matières plastiques qui est différent du premier mélange de matières plastiques et qui est composé d'un deuxième composant principal et d'au moins un composant mineur associé, et que, après avoir achevé la première tâche de production, on passe à la deuxième tâche de production en cessant l'alimentation en le premier mélange de matières plastiques et en commençant l'alimentation en le deuxième mélange de matières plastiques,
**caractérisé en ce que**
on cesse l'alimentation en le premier mélange de matières plastiques en fermant un premier organe obturateur (8) et on commence l'alimentation en le deuxième mélange de matières plastiques en ouvrant un deuxième organe obturateur (8'), la fermeture du premier organe obturateur (8) et l'ouverture du deuxième organe obturateur (8') étant effectuées de façon simultanée ou à intervalle de temps court de façon que, lorsqu'on passe de ladite première tâche de production à ladite deuxième tâche de production, l'alimentation de l'extrudeuse (1) est effectuée de façon continue, au moins un composant du premier mélange de matières plastiques étant différent de tous les composants du deuxième mélange de matières plastiques ou au moins un composant du deuxième mélange de matières plastiques étant différent de tous les composants du premier mélange de matières plastiques.

2. Procédé selon la revendication 1, **caractérisé en ce que** pendant la période de production de la première tâche de production le deuxième groupe de stations de dosage (31, 32, 33, 34) est mis en état inactif de façon qu'on peut préparer les stations de dosage (31, 32, 33, 34) du deuxième groupe de façon manuelle et/ou moyennant un deuxième organe de commande.

3. Procédé selon l'une quelconque des revendications précédentes, **caractérisé en ce qu'**on effectue le passage en déplaçant manuellement une partie desdits groupes de stations de dosage.

4. Procédé selon l'une quelconque des revendications précédentes, **caractérisé en ce que** chaque organe obturateur (8, 8') est une vanne d'arrêt dans un conduit d'alimentation commun (4, 4') s'étendant depuis respectivement un premier (21, 22, 23, 24, 25, 26) ou un deuxième (31, 32, 33, 34) groupe de stations de dosage à ladite extrudeuse.

5. Procédé selon l'une quelconque des revendications précédentes, **caractérisé en ce que** les positions de fermeture ou d'ouverture des vannes d'arrêt (8, 8') sont détectées par des interrupteurs de fin de course ou des puces RFID et sont communiquées au système de commande de la machine.

6. Procédé selon l'une quelconque des revendications précédentes, **caractérisé en ce que** le procédé est effectué moyennant plusieurs extrudeuses (1) auxquelles sont respectivement associés des premier et deuxième groupes de stations de dosage.

7. Procédé selon l'une quelconque des revendications précédentes, **caractérisé en ce qu'**à ladite extrudeuse (1), ou à chaque extrudeuse (1), sont associés plus que deux groupes de stations de dosage par lesquels celle-ci est alimentée en des mélanges différents de matières plastiques de manière successive.

8. Procédé selon l'une quelconque des revendications précédentes, **caractérisé en ce qu'**au moins les deux composants principaux et/ou au moins un ou tous les composants mineurs sont apte à l'écoulement.

9. Procédé selon l'une quelconque des revendications précédentes, **caractérisé en ce que** les produits en matière plastique sont des films gonflés, des films moulés, des non-tissés, ou des pièces moulées par injection.

10. Installation à opération continue conforme au procédé selon l'une quelconque des revendications précédentes pour mise en forme de matière plastique, comportant au moins une extrudeuse (1), ladite installation comprenant deux groupes de stations de dosage pour l'extrudeuse (1) et un organe de commande pour lesdits groupes de stations de dosage, **caractérisée en ce que** ladite installation comprend un premier organe obturateur (8) et un deuxième organe obturateur (8'), le premier organe obturateur (8) et le deuxième organe obturateur (8') étant adaptés pour cesser l'alimentation en le premier mélange de matières plastiques en fermant le premier organe obturateur (8) et pour commencer l'alimentation en le deuxième mélange de matières plastiques en ouvrant le deuxième organe obturateur (8'), la fermeture du premier organe obturateur (8) et l'ouverture du deuxième organe obturateur (8') pouvant être effectuées de façon simultanée ou à intervalle de temps court de façon que, lorsqu'on passe de ladite première tâche de production à ladite deuxième tâche de production, l'alimentation de l'extrudeuse (1) peut être effectuée de façon continue.

11. Installation selon la revendication 10, **caractérisée en ce qu'**elle est munie d'un system de dosage gravimétrique à vis qui est adapté pour effectuer le dosage du composant principal moyennant un doseur à vis et l'alimentation en le composant mineur.

12. Installation selon la revendication 10, **caractérisée en ce qu'**elle est munie d'un système de dosage à opération discontinue.

13. Installation selon la revendication 10, **caractérisée en ce qu'**elle est munie d'un système de dosage par vibration.

14. Installation selon l'une quelconque des revendications 10 à 13, **caractérisée en ce que** l'installation pour mise en forme de matière plastique est une installation pour gonflage de films, une installation pour moulage de films, une installation pour production de non-tissé, une installation pour moulage par soufflage, ou une installation pour moulage par injection.
